# EUROPEAN PATENT APPLICATION

(11) **EP 4 447 260 A2**
(43) Date of publication of application: **16.10.2024**
(21) Application number: 24183446.4
(22) Date of filing: 31.12.2020
(51) Int. Cl.: H02J 7/00

(54) **FAST CHARGING UNIVERSAL SERIAL BUS (USB TYPE-C) CONNECTOR AND BATTERY CHARGING SYSTEM FOR AN AUTO BATTERY CHARGER**

(30) Priority: 03.01.2020 US 202062956892 P
(62) Divisional of application: 20911122.8
(71) Applicant: The Noco Company, Glenwillow, OH 44139 (US)
(72) Inventor: UNDERHILL, Derek Michael, Glenwillow, 44139 (US); IWERUNMOR, Ifechukwude Christian, Glenwillow, 44139 (US); SITU, Tom, Glenwillow, 44139 (US); MCBRIDE, James P., Glenwillow, 44139 (US); STANFIELD, James Richard, Glenwillow, 44139 (US)
(74) Representative: Holzwarth-Rochford, Andreas

(57) **Abstract**

Provided is a universal serial bus (USB-C PD) connector, including an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors.

## Description

### FIELD

The present invention is directed to a fast charging universal serial bus (e.g. USB Type-C) connector, and battery charging system for an auto battery charger.

### BACKGROUND

USB-C is a fast growing industry standard connector for transmitting both power and data on a single cable to combine both power with fast communications.

For full USB-C compatibility it is necessary to provide high function controller IC's as well as Driver IC's. Complex buck and boost converters are also required. The problem with this approach is it drives cost up.

There exists a need for a new approach that provides USB-C function and protection, but is cost effective. This approach can be applied to a new type of battery auto charger.

### SUMMARY

The USB-C battery charger (e.g. auto charger) according to the present invention can be custom designed, both electrically and mechanically. The battery charger can include a new cable assembly with USB-C connector for connecting to a USB-C module.

The electrical design maximizes power delivery for jump starters (e.g. NOCO Boost Jumpstarters) while mechanically and electrically protecting standard USB-C devices such as smartphones. A block diagram is shown in the drawings and described below.

The electrical connector is a new version of a USB-C PD industry standard that delivers high power (e.g. 60-100 watts) allowing for fast charging of jump starters (e.g. NOCO Boost Jump-starters) at a low cost.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the one or more electrical conductors is multiple spaced apart electrical conductors.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the one or more electrical conductors is multiple spaced apart electrical conductors, and wherein the multiple spaced apart electrical conductors is multiple electrically conductive spaced apart contacts located within the oval-shaped inner recess.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the one or more electrical conductors is multiple spaced apart electrical conductors, wherein the multiple spaced apart electrical conductors is multiple electrically conductive spaced apart contacts located within the oval-shaped inner recess, and wherein the electrically conductive spaced apart contacts are affixed to an inner wall defining the oval-shaped inner recess.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the one or more electrical conductors is one or more conductive metal contacts.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the oval-shaped plug is made of a synthetic resin material or plastic and the one or more electrical conductors is insert molded into the oval-shaped plug.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the oval-shaped plug is provided with an upper flat surface and lower flat surface.

The presently described subject matter is directed to a universal serial bus (USB-C PD) connector, comprising or consisting of: an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion, wherein the oval-shaped inner recess is provided with one or more electrical conductors, wherein the oval-shaped plug is provided with an upper flat surface and lower flat surface, and wherein the oval-shaped plug is provided with a half cylinder-shaped outer left side surface and a half cylinder-shaped outer right side surface.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, and wherein the one or more electrical conductors is multiple spaced apart electrical conductors.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, wherein the one or more electrical conductors is multiple spaced apart electrical conductors, and wherein the multiple spaced apart electrical conductors is multiple electrically conductive spaced apart contacts located within the oval-shaped inner recess.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, wherein the one or more electrical conductors is multiple spaced apart electrical conductors, wherein the multiple spaced apart electrical conductors is multiple electrically conductive spaced apart contacts located within the oval-shaped inner recess, and wherein the electrically conductive spaced apart contacts are affixed to an inner wall defining the oval-shaped inner recess.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, and wherein the one or more electrical conductors is one or more conductive metal contacts.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, and wherein the oval-shaped port is made of a synthetic resin material or plastic and the one or more electrical conductors is insert molded into the oval-shaped port.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, and wherein the oval-shaped port is provided with an upper flat surface and lower flat surface.

The presently described subject matter is directed to a universal serial bus (USB-C PD) port, comprising or consisting of: an oval-shaped outer rim, an oval-shaped recess located within the oval-shaped outer rim, an oval-shaped protrusion located within the oval-shaped recess, an oval-shaped inner recess disposed within the oval-shaped inner protrusion, wherein the oval-shaped inner recess is provided with one or more electrical conductors, wherein the oval-shaped port is provided with an upper flat surface and lower flat surface, and wherein the oval-shaped port is provided with a half cylinder-shaped outer left side surface and a half cylinder-shaped outer right side surface.

### BRIEF DESCRIPTION OF DRAWINGS

FIG. 1 is a block diagram of the fast charging system and device.
FIG. 2 is a perspective view of the electrical connector and electrical port according to the present invention shown separated apart.
FIG. 3 is a perspective view of the electrical connector and electrical port according to the present invention shown connected together.
FIG. 4 is an end view of the insertion end of the electrical connector shown in FIG. 2.
FIG. 5 is an opposite end of the electrical connector shown in FIG. 4.
FIG. 6 is a top planar view of the electrical connector shown in FIG. 2.
FIG. 7 is a bottom planar view of the electrical connector shown in FIG. 2.
FIG. 8 is a left side elevational view of the electrical connector shown in FIG. 2.
FIG. 9 is a right side elevational view of the electrical connector shown in FIG. 2.
FIG. 10 is an end elevational view of the electrical connector and electrical port shown in FIGS. 3 and 4 connected together.
FIG. 11 is a longitudinal vertical cross-sectional view of the electrical connector and port shown in FIGS. 3, 4, and 10.

### DETAILED DESCRIPTION

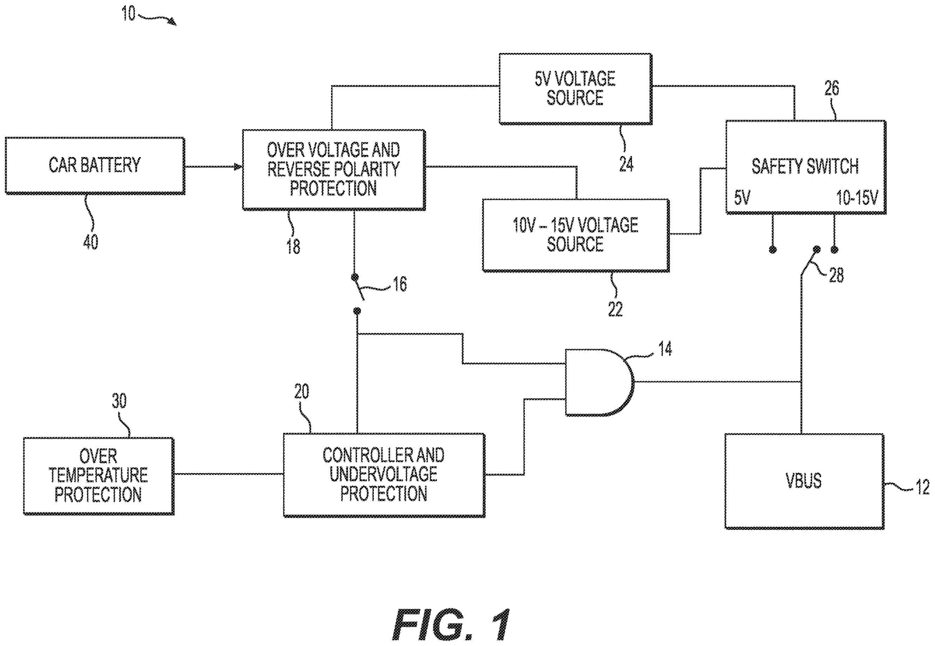

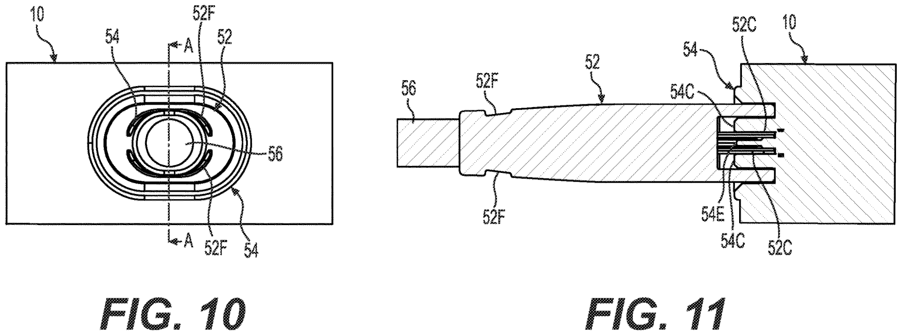

The fast charging universal serial bus (e.g. USB Type-C) battery charging system 10 for use with a battery charger (e.g. auto charger) for handling higher power is shown in FIGS. 1, 2, 10, and 11.

The battery charging system 10 comprises:
1) VBUS 12 (e.g. main power line);
2) AND gate 14;
3) switch 16;
4) over voltage and reverse polarity protection 18;
5) controller and undervoltage protection 20;
6) 10V - 15V voltage source 22;
7) 5V voltage source 24;
8) safety switch 26;
9) switch 28; and
10) overtemperature protection.

### VBUS

The VBUS 12 is a main power line. High power is provided on VBUS by delivering current directly from the Vehicle DC Power Port through a FET switch that is controlled by a customized USB-C Driver. The customized USB-C Driver communicates with our NOCO Boost Jump-starters, then when confirmed, enables the FET switch allowing power to be delivered for charging.

### Overvoltage Protection

The battery charging system 10 can include overvoltage protection 18, for example, in case a user accidentally connects to a 24V plug.

### Undervoltage Protect

The battery charging system 10 can also include undervoltage protection 20 from car batteries that have a voltage that is too low. If the car battery 40 drops below 10V, the Auto Charger shuts off.

### Reverse Voltage Protection

The battery charging system 10 can include reverse polarity protection 18 from Reverse Car Battery connections.

### 10-15V Source

The battery charging system 10 can include the ability to switch in a 10-15V Voltage source 22. This is the main charging source for the NOCO Boost Jump-starters. The USB-C Driver will communicate with the Jump-starter to enable this 10-15V Voltage source 22.

### Safety Switch

The battery charging system 10 can include a safety switch 26 that will only allow the 10-15V Voltage source 22 to be passed through, if the USB-C driver determines that it is safe to do so.

### 5V Voltage Source

The battery charging system 10 can include a 5V Voltage Source 24 that is used for enabling and low power on the VBUS 12.

### Overtemperature Protection

The battery charging system 10 can include over temperature protection 30 that shuts down power on the VBUS 12, if the temperature is ever detected too high.

### Keyed Connector

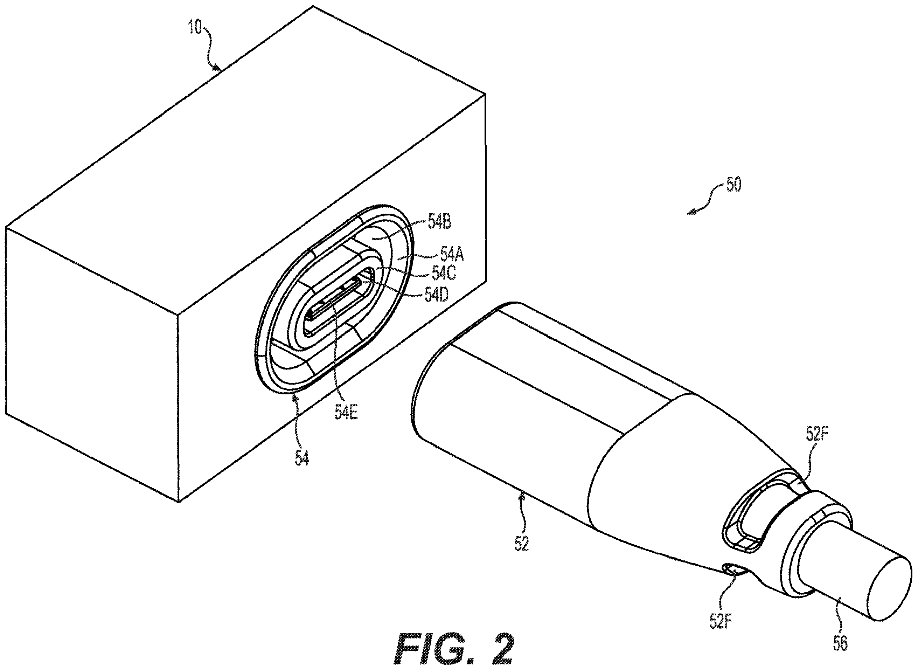

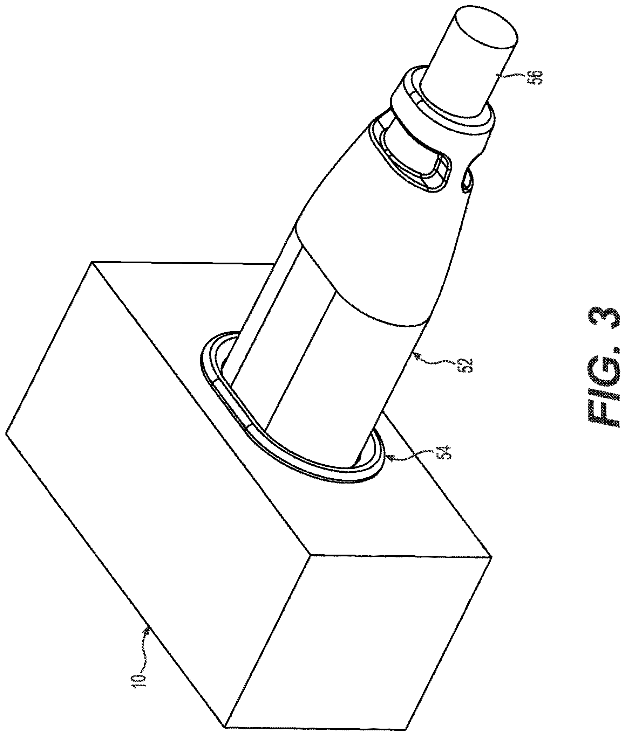

The battery charging system includes a custom connector arrangement 50 comprising an electrical connector 52 and an electrical port 54, as shown in FIGS. 2, 3, 10, and 11, configured to allow this Auto charger to only plug into a particular type or brand of jump starter (e.g. NOCO Jump Starter). Specifically, the electrical connector 52 and electrical port 54 are compatible and configured to properly connect and operate in conjunction.

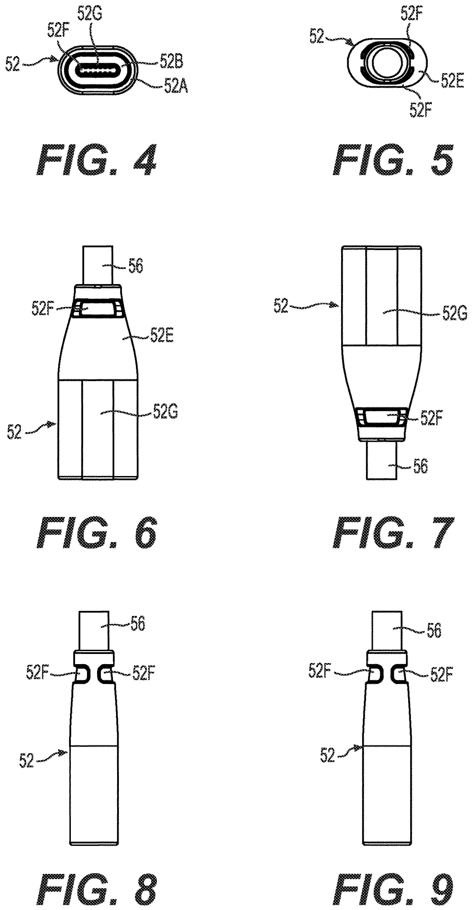

The electrical connector 52 is provided with an oval-shaped configuration, as shown in FIGS. 4 and 5. The electrical connector 52 comprises an oval-shaped outer rim 52A, an oval-shaped recess 52B, and an oval-shaped inner protrusion 52F having an inner oval-shaped recess having electrical conductors, as shown in FIG. 4.

The electrical port 54 is provided with an oval-shaped configuration, as shown in FIG. 2. The electrical port 54 comprises an oval-shaped outer rim 54A, an oval-shaped recess 54B, an oval-shaped inner protrusion 54C, an oval-shaped inner recess 54D, and an oval-shaped protrusion 54E having electrical conductors.

Further advantageous embodiments are described in the following clauses.
1. A universal serial bus (USB-C PD) connector, comprising:
   an oval-shaped plug having an end face, the end face having an oval-shaped outer rim, an oval-shaped recess located within the oval-shaped outer rim, an oval-shaped inner protrusion located within the oval-shaped recess, and an oval-shaped inner recess disposed within the oval-shaped inner protrusion,
   wherein the oval-shaped inner recess is provided with one or more electrical conductors.
2. The connector according to clause 1, wherein the one or more electrical conductors is multiple spaced apart electrical conductors.
3. The connector according to clause 2, wherein the multiple spaced apart electrical conductors is multiple electrically conductive spaced apart contacts located within the oval-shaped inner recess.
4. The connector according to clause 3, wherein the electrically conductive spaced apart contacts are affixed to an inner wall defining the oval-shaped inner recess.
5. The connector according to clause 1, wherein the one or more electrical conductors is one or more conductive metal contacts.
6. The connector according to clause 1, wherein the oval-shaped plug is made of a synthetic resin material or plastic and the one or more electrical conductors is insert molded into the oval-shaped plug.
7. The connector according to clause 1, wherein the oval-shaped plug is provided with an upper flat surface and lower flat surface.
8. The connector according to clause 7, wherein the oval-shaped plug is provided with a half cylinder-shaped outer left side surface and a half cylinder-shaped outer right side surface.
9. A universal serial bus (USB-C PD) port, comprising:
   an oval-shaped outer rim, an oval-shaped recess located within the oval-shaped outer rim, an oval-shaped protrusion located within the oval-shaped recess, an oval-shaped inner recess disposed within the oval-shaped inner protrusion, and
   wherein the oval-shaped inner recess is provided with one or more electrical conductors.
10. The port according to clause 9, wherein the one or more electrical conductors is multiple spaced apart electrical conductors.
11. The port according to clause 10, wherein the multiple spaced apart electrical conductors is multiple electrically conductive spaced apart contacts located within the oval-shaped inner recess.
12. The port according to clause 11, wherein the electrically conductive spaced apart contacts are affixed to an inner wall defining the oval-shaped inner recess.
13. The port according to clause 9, wherein the one or more electrical conductors is one or more conductive metal contacts.
14. The port according to clause 9, wherein the oval-shaped port is made of a synthetic resin material or plastic and the one or more electrical conductors is insert molded into the oval-shaped port.
15. The port according to clause 9, wherein the oval-shaped port is provided with an upper flat surface and lower flat surface.
16. The port according to clause 15, wherein the oval-shaped port is provided with a half cylinder-shaped outer left side surface and a half cylinder-shaped outer right side surface.

## Claims

1. A battery charging system (10) for charging a voltage source (22, 24) of a jump starter device, comprising:
a universal serial bus (USB) connector (52) for receiving power from a direct-current (DC) port of a vehicle;
a voltage detection circuit (18) configured to detect a voltage of a vehicle battery (40); and
a USB driver configured to control charging power from the USB connector (52) to the a voltage source (22, 24) of the jump starter device based at least in part on the detected voltage of the vehicle battery (40).

2. The battery charging system of claim 1, wherein the USB driver enables a high power charging mode when the detected voltage of the vehicle battery (40) is above a minimum threshold voltage level.

3. The battery charging system of claim 2, wherein the USB driver disables the high power charging mode when the detected voltage of the vehicle battery (40) is below the minimum threshold voltage level.

4. The battery charging system of claim 1, wherein the USB driver enables a low power charging mode when the detected voltage of the vehicle battery (40) is below a minimum threshold voltage level.

5. The battery charging system of claim 3, wherein the minimum threshold voltage level is 10 volts.

6. The battery charging system of claim 1, further comprising:
a temperature detection circuit (30) configured to detect a temperature of the a voltage source (22, 24) of the jump starter device;
wherein the USB driver is configured to control charging power from the USB connector (52) to the a voltage source (22, 24) of the jump starter device based at least in part of the detected voltage of the vehicle battery (40) and the detected temperature of the a voltage source (22, 24) .

7. The battery charging system of claim 6, wherein the USB driver enables a high power charging mode when the detected voltage of the vehicle battery (40) is above a minimum threshold voltage level and the detected temperature of the a voltage source (22, 24) is below a maximum threshold temperature level.

8. The battery charging system of claim 7, wherein the USB driver disables the high power charging mode when the detected voltage of the vehicle battery (40) is below the minimum threshold voltage level or the detected temperature of the a voltage source (22, 24) is above the maximum threshold temperature level.

9. The battery charging system of claim 6, wherein the USB driver enable a low power charging mode when the detected voltage of the vehicle battery (40) is below the minimum threshold voltage level or the detected temperature of the a voltage source (22, 24) is above the maximum threshold temperature level.

10. The battery charging system of claim 1, further comprising:
a reverse polarity detection circuit (18) that is used by the battery charging system to prevent charging of the a voltage source (22, 24) from the DC port if the DC port is connected to the vehicle battery (40) with an incorrect polarity.

11. The battery charging system of claim 1, further comprising:
a safety switch (26) that prevents charging of the a voltage source (22, 24) from the DC port.

12. The battery charging system of claim 1, wherein the safety switch (26) is controlled by the USB driver based on a determination of whether the USB connector (52) is attached to a compatible jump starter device.

13. A jump starter device, comprising:
voltage source (22, 24) ; and
a battery charging system (10) according to one of the preceding claims.
